# EUROPÄISCHE PATENTANMELDUNG

(11) **EP 2 465 348 A2**
(43) Veröffentlichungstag der Anmeldung: **20.06.2012**
(21) Anmeldenummer: 11401660.3
(22) Anmeldetag: 07.12.2011
(51) Int. Cl.: A01M 7/00, A01B 79/00

(54) **Landwirtschaftliche Verteilmaschine**

(30) Priorität: 15.12.2010 DE 102010061241
(71) Anmelder: Amazonen-Werke H. Dreyer GmbH & Co. KG, 49205 Hasbergen (DE)
(72) Erfinder: Haselroth, Hanno, 49545 Tecklenburg (DE); Mindrup, Tobias, 49080 Osnabrück (DE); Rahe, Florian Dr., 49504 Lotte (DE); Wilke, Helmut, 49497 Mettingen (DE)

(57) **Zusammenfassung**

Landwirtschaftliche Verteilmaschine, insbesondere wie Pflanzenschutzspritze, Sämaschine, Düngerstreuer etc., mit zumindest einer Steuereinheit zum Steuern elektrischer Stellelemente und/oder zum Ein- und Ausschalten und/oder Verstellen von Dosierorganen und/oder zur Erfassung von Sensordaten und/oder zum Schalten und/oder Regeln eines elektrischen Verbrauchers und/oder stromführender Leitungen zum Betreiben elektrischer Elemente, dadurch gekennzeichnet, dass einer Steuereinheit (3) mehrere elektrische Stellelemente und/oder Einheiten zum Ein- und Ausschalten und/oder Verstellen von Dosierorganen und/oder zur Erfassung von Sensordaten und/oder zum Schalten und/oder Regeln eines Elektrischen Verbrauchers und/oder stromführender Leitungen zum Betreiben elektrischer Elemente zugeordnet sind und dass mehrere Steuereinheiten (3) über einen Bus (2) mit einem Steuerrechner (1) und/oder einer Zentraleinheit (9) kommunizieren bzw. verbunden sind.

## Beschreibung

Die Erfindung betrifft eine landwirtschaftliche Verteilmaschine gemäß des Oberbegriffes des Patentanspruches 1.

Eine derartige Verteilmaschine ist beispielsweise in der EP 03 73 034 B1 oder der DE 10 2005 012 578 A1 beschrieben. In Fig. 6 der EP 03 73 034 B1 ist ein Schaltplan für eine Pflanzenschutzspritze gezeigt, bei welcher jeder Spritzdüse ein elektrisch zu schaltendes Magnetventil zugeordnet ist. Jedem Magnetventil ist ein Schaltkreis zugeordnet, welcher von einem Mikroprozessor gesteuert wird. Auf Grund der Ausgestaltung dieser Schaltung sind alle Magnetventile mit einer zentralen Verteilerstelle direkt verbunden. Bei einer üblichen Pflanzenschutzspritze mit Arbeitsbreiten von bis zu 40 m bedeutet das einen großen Aufwand für das Verlegen von Kabeln zu den Ventilen. Ein Verlegen in dieser Art und Weise ist nicht mehr praktikabel durchzuführen.

In der DE 10 2005 012 578 A1 ist der Aufbau in vorteilhafter Weise so erweitert worden, dass allen Stellgliedern (z.B. die Ventile aus EP 03 73 034 B1) ein Mikroprozessor zugeordnet ist und die Steuerleitung als Bus System ausgebildet ist. Dies reduziert den Verkabelungsaufwand deutlich. Da jedem Stellglied ein Mikroprozessor, ein Kommunikationsmodul, vorzugsweise ein CAN-Bus Modul und ein Energiespeicher zugeordnet ist, wird der Aufbau teuer. Zudem ist die Anzahl der möglichen Module an einem Bus-System meistens beschränkt. So kann es bei entsprechender Anzahl der Stellglieder dazu kommen, dass nicht mehr alle angesteuert werden können.

Ein weiterer Nachteil ist die Anordnung der Stellglieder im Bus-System. Wie es bei vielen Bus-Systemen (insbesondere beim in der Landwirtschaft häufig verwendeten CAN-Bus) üblich ist, kann die Position eines Stellgliedes im Bus nicht bestimmt werden. Somit ist auch die Anbauposition eines Stellgliedes nicht über das Bus-System zu ermitteln. Bei einer Dynamischen Vergabe der Adressen der Geräte im Bus gibt es dann keine Möglichkeit die Position der Stellglieder festzustellen.

Der Erfindung liegt die Aufgabe zu Grunde, eine einfache Möglichkeit aufzuzeigen, mehrere Stellelemente und/oder Einheiten zum Ein- und Ausschalten und/oder Verstellen von Dosierorganen und/oder zum Erfassen von Sensordaten und/oder zum Schalten und/oder Regeln eines elektrischen Verbrauchers mit einem Steuerrechner zu verbinden.

Diese Aufgabe wird erfindungsgemäß durch die Merkmale des Patentanspruches 1 gelöst. Vorteilhafte Weiterbildungen ergeben sich aus den Unteransprüchen.

Infolge dieser Maßnahmen wird nicht mehr jedem Stellelement oder Stellglied notwendigerweise je mindestens ein Mikroprozessor, ein Energiespeicher und eine Busanbindung zugeordnet, sondern es werden Gruppen von Stellgliedern gebildet, die jeweils über eine Steuereinheit angesteuert werden. Dadurch kann auch die maximale Anzahl der ansteuerbaren Stellglieder erhöht werden. Als Bus kann unter anderem der in der Landwirtschaft häufig verwendete CAN-Bus verwendet werden.

Dabei kann das System auch derartig ausgestaltet sein, dass anstatt der Stellglieder andere elektrische Einheiten angebunden sind. Diese können beispielhaft Sensoren, geschaltete oder geregelte Dosierorgane, geschaltete oder geregelte Beleuchtungen oder andere elektrische Verbraucher sein. Im Weiteren wird jedoch immer von Stellgliedern gesprochen werden, die in gleicher Weise durch Sensoren oder andere geregelte oder geschaltete elektrische Geräte ersetzt werden können.

Bei der landwirtschaftlichen Verteilmaschine kann es sich insbesondere um eine Pflanzenschutzspritze, eine Sämaschine, oder einen Düngerstreuer handeln. An einer Pflanzenschutzspritze kann es sich bei den Stellgliedern insbesondere um schaltbare Ventile handeln, die den einzelnen Düsen zugeordnet sind. Damit ist es möglich jede Düse an einer solchen Spritze einzeln zu schalten. Bei einer Sämaschine kann es sich um Aktoren handeln, die jeweils einem Säaggregate zugeordnet sind und dieses ausschalten. Bei pneumatischen Sämaschinen werden die Körner beispielsweise über eine schaltbare Klappe wieder ein den Saatguttank gelenkt. Damit ließe sich eine beliebige Reihenabschaltung realisieren, um flexibel ein Fahrgassensystem anzulegen.

Die landwirtschaftliche Verteilmaschine kann mehrere, insbesondere zwei oder mehr, Steuereinheiten umfassen.

Eine Steuereinheit kann mindestens einen Mikroprozessor und eine Anbindung an ein Bus-System umfassen. Wie in der DE 10 2005 012 578 A1 kann auch ein Energiespeicher in der Steuereinheit angeordnet sein.

Die Gruppen sind in vorteilhafter Weise so gebildet, dass sie die Struktur der landwirtschaftlichen Verteilmaschine nachbilden. Das bedeutet zum Beispiel bei einer Feldspritze, dass jedem Segment des klappbaren Verteilergestänges mindestens eine Steuereinheit zugeordnet sein kann, die die an diesem Segment befestigten Stellglieder ansteuert. Damit kann erreicht werden, dass über die Gelenke lediglich ein Kabel mit Energie- und Busanbindung geführt werden muss. Natürlich kann eine Steuereinheit auch die Stellglieder über mehrere Segmente hinweg ansteuern. Auch können mehrere Steuereinheiten einem Segment zugeordnet sein. Die Steuereinheiten können zum einen über ein Bus-System mit einem zentralen Steuerrechner verbunden sein. Zum anderen können die Steuereinheiten mit den Stellgliedern verbunden sein.

Eine Steuereinheit kann auf zweierlei Weise mit den ihr zugeordneten Stellgliedern verbunden sein.

Die Stellglieder können direkt an der ihnen zugeordneten Steuereinheit angeschlossen sein. Somit muss den Stellgliedern kein eigener Mikroprozessor mehr zugeordnet sein. Diese können in gewisser Weise "dumm" sein, da sie über den Mikroprozessor der Steuereinheit gesteuert werden. Durch diese Ausgestaltung können nur noch kurze Kabellängen notwendig sein. Auch können sich die Kosten der einzelnen Stellglieder durch den Wegfall von Komponenten deutlich reduzieren.

Die Stellglieder können aber auch über ein weiteres Bus-System mit der Steuereinheit verbunden sein. Dieses Bus System kann wie schon vorher beispielsweise ein CAN-Bus sein. Es kann aber auch ein anderes günstigeres System (z.B. LIN-Bus) verwendet werden. Dabei kann jedem Stellglied wieder mindestens ein Mikroprozessor zugeordnet sein. In dieser Ausgestaltung ist es jedoch von Vorteil, wenn das Bus-System, mit dem die Steuereinheiten mit einem Steuerrechner verbunden sind, von dem Bus-System getrennt ist, mit dem die Stellglieder mit der Steuereinheit verbunden sind. Damit lässt sich die mögliche Anzahl der über ein Bus-System angebundenen Stellglieder deutlich vergrößern. In Vorteilhafter Weise kann auch ein anderes Bus-System für die Verbindung der Steuereinheit mit den Stellgliedern verwendet werden. Hier ist es von Vorteil, wenn ein Bus-System mit kostengünstigen Komponenten eingesetzt wird. Im Gegensatz dazu können die Komponenten des Bus-Systems mit dem die Steuereinheiten an den Steuerrechner angebunden sind teurer sein.

Um die Position der Steuereinheiten im Bus zu bestimmen, kann eine weitere elektrische Leitung (Steuerleitung) parallel zum Bus vorgesehen sein. In jeder Steuereinheit kann ein Schalter vorgesehen sein, über den der Mikroprozessor die Steuerleitung zur nächsten Steuereinheit weiterschalten kann. In einem ersten Schritt kann die Steuerleitung in allen Geräten nicht durchgeschaltet sein. Somit kann ein an der Steuerleitung anliegendes Signal nur von der ersten Steuereinheit empfangen werden. Diese kommuniziert nun mit dem Steuerrechner, dass Sie ein Signal empfängt. Der Steuerrechner kann die Steuereinheit nun identifizieren und ihr eine Adresse zuordnen. Danach kann der Steuereinheit der Befehl gegeben werden, die Steuerleitung weiter zu schalten. Dies kann auch automatisch geschehen. Danach kann die nächste Steuereinheit in der Reihe das an der Steuerleitung anliegende Signal empfangen. Ab hier kann der gleiche Ablauf wie bei der ersten Steuereinheit beginnen. Durch wiederholen dieser Prozedur kann allen Geräten am Bus eine eindeutige Position zugeordnet werden, insbesondere automatisch.

Falls die Anbindung an den Bus in der Mitte erfolgen soll kann eine zusätzliche Zentraleinheit vorgesehen sein, die zwei Schalter für die Steuerleitung besitzt und auf der einen Seite über einen Bus mit dem Steuerrechner kommuniziert und auf der anderen Seite über einen weiteren, vom ersten Bus getrennten Bus mit den Steuereinheiten kommuniziert bzw. mit diesen verbunden ist.

Falls an den Steuereinheiten ein weiterer einfacher Bus angeschlossen ist, kann das oben beschriebene Verfahren auch hier Verwendet werden, um eine Reihenfolge der Geräte im Bus zu bestimmen.

Weitere Einzelheiten der Erfindung sind der Beispielsbeschreibung und den Zeichnungen zu entnehmen. Hierbei zeigen
- Fig. 1: einen Strukturplan zur beispielhaften Anordnung und Verkabelung von Steuerrechner, Steuereinheiten und Stellgliedern, wobei mehrere Stellglieder direkt an eine Steuereinheit angebunden sind,
- Fig. 2: einen Strukturplan zur beispielhaften Anordnung und Verkabelung von Steuerrechner, Steuereinheiten und Stellgliedern, wobei die Stellglieder über einen weiteren Bus an einer Steuereinheit angebunden sind,
- Fig. 3: einen Strukturplan zur beispielhaften Anordnung und Verkabelung von Steuerrechner, Steuereinheiten und Stellgliedern, wobei die Steuerleitung mit den Schaltern zur Bestimmung der Reihenfolge der Geräte am Bus mit dargestellt ist,
- Fig. 4: einen Strukturplan zur beispielhaften Anordnung und Verkabelung von Steuerrechner, Steuereinheiten und Stellgliedern, wobei eine Zentraleinheit gezeigt wird, die die Anbindung mittig an den Bus ermöglicht.

In den Abbildungen sind jeweils nur eine begrenzte Zahl an Steuereinheiten und Stellgliedern oder Stellelementen dargestellt. Das System kann jedoch nach bedarf beliebig erweitert werden.

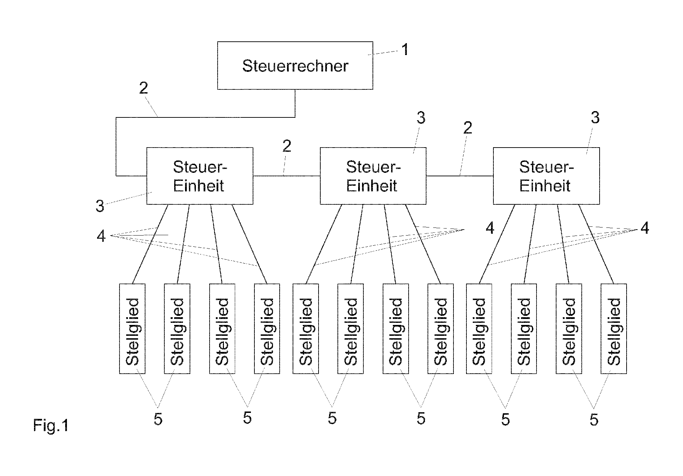

Der Strukturplan gemäß Fig. 1 zum Betreiben mehrerer Stellglieder 5 an einer landwirtschaftlichen Verteilmaschine weist einen Steuerrechner 1 und einen ersten Bus 2 auf. Über den Bus 2 sind die Steuereinheiten 3 mit dem Steuerrechner 1 verbunden. Über elektrische Verbindungen 4 ist jedes der Stellglieder 5 direkt mit einer der Steuereinheiten 3 verbunden.

Der Steuerrechner 1 kann über den Bus 2 Befehle an die Steuereinheiten 3 senden. Diese Befehle können beispielsweise eine Liste der zu betätigenden Stellglieder 5 enthalten. Die Steuereinheiten 3 werten die Befehle aus und steuern dann die entsprechenden Stellglieder direkt über die Verbindung 4 an. Durch diese Anordnung können die Verbindungen 4 kurz gehalten werden und es wird nur eine als Bus ausgeführte längere Verbindung 2 benötigt.

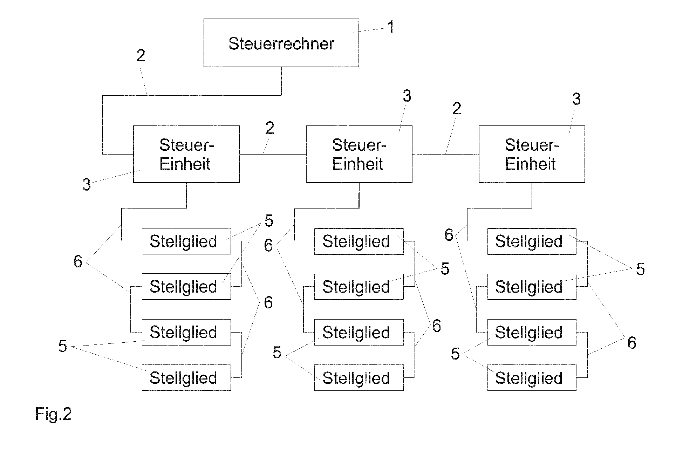

Der Strukturplan gemäß Fig. 2 zum Betreiben mehrerer Stellglieder 5 an einer landwirtschaftlichen Verteilmaschine weist einen Steuerrechner 1 und einen ersten Bus 2 auf. Über den Bus 2 sind die Steuereinheiten 3 mit dem Steuerrechner 1 verbunden. Über weitere Bus-Systeme 6 sind die Stellglieder 5 mit den Steuereinheiten 3 verbunden.

Der Steuerrechner 1 kann über den Bus 2 Befehle an die Steuereinheiten 3 senden. Diese Befehle können beispielsweise eine Liste der zu betätigenden Stellglieder 5 enthalten. Die Steuereinheiten 3 werten die Befehle aus und steuern dann die entsprechenden Stellglieder 5 über die Busverbindung 6. Bei dieser Anordnung wird nur eine als Bus ausgeführte längere Verbindung 2 benötigt. Die weiteren auch als Bus ausgeführten Verbindungen 6 können dabei kürzer ausfallen. Insbesondere kann die Anzahl der Teilnehmer am Bus 2 oder Bus 6 gering gehalten werden, so dass genügend Stellglieder 5 angesteuert werden können.

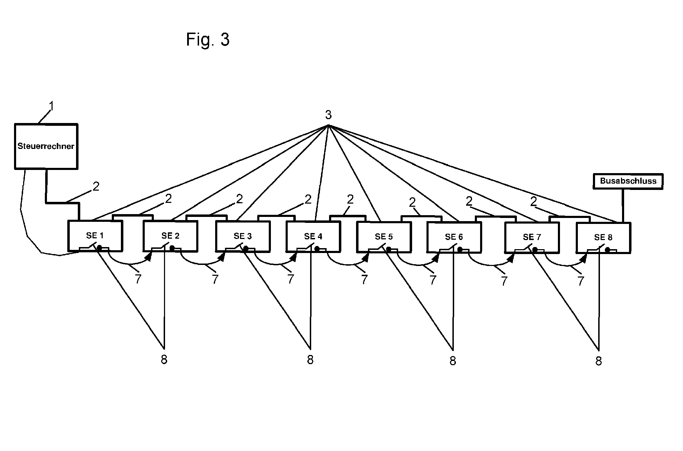

Der Strukturplan gemäß Fig. 3 zum Betreiben mehrerer Stellglieder an einer landwirtschaftlichen Verteilmaschine weist einen Steuerrechner 1 und einen ersten Bus 2 auf. Über den Bus 2 sind die Steuereinheiten 3 mit dem Steuerrechner 1 verbunden. Die Steuereinheiten sind zusätzlich über eine Steuerleitung 7 miteinander verbunden. Die Steuerleitung 7 kann über Schalter 8 in den Steuereinheiten unterbrochen werden. Diese Schalter 8 sind in allen Steuereinheiten als geöffnet dargestellt. Die an den Steuereinheiten 3 angebrachten Stellglieder sind der Übersicht halber nicht dargestellt.

In diesem Zustand ist die erste Steuereinheit direkt mit dem Steuerrechner 1 verbunden. Sie ist auch die Erste Einheit an der Steuerleitung 7. Nachdem diese Steuereinheit über den Steuerrechner initialisiert wurde, kann sie Ihren Schalter 8 schließen. Nun kann die zweite Steuereinheit über die Steuerleitung 7 ein Signal empfangen. Damit kann diese als die nächste Steuereinheit in der Reihe identifiziert werden. Nachdem diese Steuereinheit durch den Steuerrechner initialisiert wurde, kann der Schalter dieser Steuereinheit geschlossen und die nächste Steuereinheit in dieser Reihe identifiziert werden. Durch Wiederholung dieser Prozedur können allen Steuereinheiten in der Reihe eine eindeutige Position zugeordnet werden.

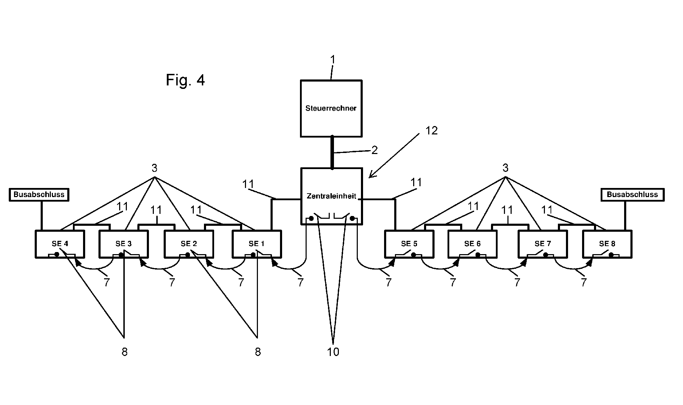

Der Strukturplan gemäß Fig. 4 zum Betreiben mehrerer Stellglieder an einer landwirtschaftlichen Verteilmaschine weist einen Steuerrechner 1 und einen ersten Bus 2 auf. Über den Bus 2 ist eine Zentraleinheit 12 mit dem Steuerrechner 1 verbunden. Die Steuereinheiten 3 sind über eine Busverbindung 11 und eine Steuerleitung 7 mit der Zentraleinheit 12 verbunden. Die Zentraleinheit 12 enthält zwei Schalter 10 zum Schalten der Steuerleitung 7. In der Zeichnung sind alle Schalter 10 als geöffnet dargestellt. Die an den Steuereinheiten 3 angebrachten Stellglieder sind der Übersicht halber nicht dargestellt.

In diesem Zustand ist keine Steuereinheit 3 über die Steuerleitung 7 verbunden. Wird einer der Schalter 10 in der Zentraleinheit geschlossen, so kann an diesem Strang die Prozedur durchgeführt werden, wie sie für Fig. 3 beschrieben wurde. Damit kann allen Steuereinheiten 3 in dem Strang eine eindeutige Position zugeordnet werden. Dies kann anschließend für den anderen Strang durchgeführt werden. Mit diesem Vorgehen besteht die Möglichkeit, auch mittig an den Bus 11 angeschlossen, den Steuereinheiten 3 eine eindeutige Position zuzuordnen.

## Patentansprüche

1. Landwirtschaftliche Verteilmaschine, insbesondere wie Pflanzenschutzspritze, Sämaschine, Düngerstreuer etc., mit zumindest einer Steuereinheit zum Steuern elektrischer Stellelemente und/oder zum Ein- und Ausschalten und/oder Verstellen von Dosierorganen und/oder zur Erfassung von Sensordaten und/oder zum Schalten und/oder Regeln eines elektrischen Verbrauchers und/oder stromführender Leitungen zum Betreiben elektrischer Elemente, **dadurch gekennzeichnet, dass** einer Steuereinheit (3) mehrere elektrische Stellelemente und/oder Einheiten zum Ein- und Ausschalten und/oder Verstellen von Dosierorganen und/oder zur Erfassung von Sensordaten und/oder zum Schalten und/oder Regeln eines Elektrischen Verbrauchers und/oder stromführender Leitungen zum Betreiben elektrischer Elemente zugeordnet sind und dass mehrere Steuereinheiten (3) über einen Bus (2) mit einem Steuerrechner (1) und/oder einer Zentraleinheit (9) kommunizieren bzw. verbunden sind.

2. Verteilmaschine nach Anspruch 1, **dadurch gekennzeichnet, dass** die Stellelemente (5) und/oder Einheiten zum Ein- und Ausschalten und/oder Verstellen von Dosierorganen und/oder zur Erfassung von Sensordaten und/oder zum Schalten und/oder Regeln eines elektrischen Verbrauchers und/oder stromführender Leitungen zum Betreiben elektrischer Elemente über Leitungen 4 direkt an die Steuereinheiten 3 angeschlossen sind.

3. Verteilmaschine nach Anspruch 1, **dadurch gekennzeichnet, dass** die Stellelemente (5) und/oder Einheiten zum Ein- und Ausschalten und/oder Verstellen von Dosierorganen und/oder zur Erfassung von Sensordaten und/oder zum Schalten und/oder Regeln eines elektrischen Verbrauchers und/oder stromführender Leitungen zum Betreiben elektrischer Elemente über einen weiteren Bus (6) an die Steuereinheiten (3) angeschlossen sind.

4. Verteilmaschine nach einem oder mehreren der vorstehenden Ansprüche, **dadurch gekennzeichnet, dass** den Steuereinheiten ein elektrischer und/oder pneumatischer und/oder hydraulischer Energiespeicher zugeordnet ist.

5. Verteilmaschine nach einem oder mehreren der vorstehenden Ansprüche, **dadurch gekennzeichnet, dass** parallel zum Bus (2) zwischen den Steuereinheiten (3) und einem Steuerrechner (1) und/oder Zentraleinheit (9) eine Steuerleitung (7) und in den Steuereinheiten (3) ein Schalter (8) vorhanden ist, über die durch sukzessives schalten der Schalter (8), Kommunikation über den Bus (2) und Anlegen eines Signals an der Steuerleitung (7), die Reihenfolge der Steuereinheiten am Bus bestimmt werden kann.

6. Verteilmaschine nach einem oder mehreren der vorstehenden Ansprüche, **dadurch gekennzeichnet, dass** parallel zum Bus (6) zwischen den Stellelementen und/oder Einheiten zum Ein- und Ausschalten und/oder Verstellen von Dosierorganen und/oder zur Erfassung von Sensordaten und/oder zum Schalten und/oder Regeln eines elektrischen Verbrauchers und/oder stromführender Leitungen zum Betreiben elektrischer Elemente eine Steuerleitung und in den Stellelementen und/oder Einheiten zum Ein- und Ausschalten und/oder Verstellen von Dosierorganen und/oder zur Erfassung von Sensordaten und/oder zum Schalten und/oder Regeln eines elektrischen Verbrauchers und/oder stromführender Leitungen zum Betreiben elektrischer Elemente ein Schalter (8) vorhanden ist, über den die Reihenfolge der Stellelemente und/oder Einheiten zum Ein- und Ausschalten und/oder Verstellen von Dosierorganen und/oder zur Erfassung von Sensordaten und/oder zum Schalten und/oder Regeln eines elektrischen Verbrauchers und/oder stromführender Leitungen zum Betreiben elektrischer Elemente am Bus bestimmt werden kann.

7. Verteilmaschine nach einem oder mehreren der vorstehenden Ansprüche, **dadurch gekennzeichnet, dass** an einer Zentraleinheit (12) zwei Schalter (10) für die Steuerleitung (7) vorgesehen sind, so dass eine Anbindung an den Bus (2) mittig erfolgen kann und dennoch eine Reihenfolge der Steuereinheiten über sukzessives Schalten der Schalter (10) und (8) und über die Steuerleitung (7) ermittelt werden kann.

8. Verteilmaschine nach einem oder mehreren der vorstehenden Ansprüche, **dadurch gekennzeichnet, dass** eine Zentraleinheit (12) mit zwei Bus-Systemen ausgestattet ist und diese über den einen Bus mit einem Steuerrechner kommuniziert und über den anderen Bus mit den Steuereinheiten.
